# EUROPEAN PATENT APPLICATION

(11) **EP 4 311 294 A1**
(43) Date of publication of application: **24.01.2024**
(21) Application number: 21930893.9
(22) Date of filing: 19.03.2021
(51) Int. Cl.: H04W 24/08, H04W 74/08, H04B 17/318

(54) **RANDOM ACCESS METHOD, RANDOM ACCESS APPARATUS AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2021/081855
(87) International publication number: WO 2022/193303

(57) **Abstract**

The present invention relates to a random access method, a random access apparatus and a storage medium. The random access method is applied to a terminal, and comprises: determining the type of a terminal, and a reference signal receiving power (RSRP) threshold value corresponding to the type of the terminal; and performing two-step random access of a random access channel (RACH) on the basis of an RSRP measurement value of the terminal and the RSRP threshold value, wherein the type of the terminal comprises a first type and a second type. By means of the present invention, some terminals can normally use two-step random access of an RACH, thereby avoiding power waste of some terminals.

## Description

### FIELD

The present invention relates to the field of wireless communication technology, and particularly to a random access method, a random access apparatus, and a storage medium.

### BACKGROUND

In the next generation communication technology, a terminal may support random access based on a four-step random access channel (RACH) procedure and random access based on a two-step RACH procedure. Whether the terminal adopts the four-step random access or two-step random access is determined based on a measurement value of reference signal receiving power (RSRP) of the terminal. The terminal receives an RSRP threshold value broadcast by a network device, and it is determined to adopt the two-step random access in a case that the RSRP measurement value of the terminal is higher than or equal to the RSRP threshold value.

In the related art, reduced capability (Redcap) terminals are introduced, and may have relatively low RSRP measurement value due to an antenna efficiency loss of the Redcap terminals, and thus some of the Redcap terminals could not benefit from adopting the two-step random access to save power.

### SUMMARY

In order to solve the problems in the related art, the present invention provides a random access method, a random access device, and a storage medium.

According to a first aspect of embodiments of the present invention, there is provided a random access method, applied to a terminal, including: determining a type of the terminal, and an RSRP threshold value corresponding to the type of the terminal; and performing random access of a two-step RACH based on an RSRP measurement value of the terminal and the RSRP threshold value, where the type of the terminal includes a first type and a second type.

In an embodiment, the RSRP threshold value includes a first RSRP threshold value and a second RSRP threshold value; and the first RSRP threshold value corresponds to the first type of the terminal and the second RSRP threshold value corresponds to the second type of the terminal.

In an embodiment, performing the random access of the two-step RACH procedure based on the RSRP measurement value of the terminal and the RSRP threshold value includes: performing the random access of the two-step RACH procedure in response to the type of the terminal being the first type and the RSRP measurement value of the terminal being greater than or equal to the first RSRP threshold value.

In an embodiment, performing the random access of the two-step RACH procedure based on the RSRP measurement value of the terminal and the RSRP threshold value includes: performing the random access of the two-step RACH procedure in response to the type of the terminal being the second type and the RSRP measurement value of the terminal being greater than or equal to the second RSRP threshold value.

In an embodiment, a communication capability of the first type of terminal is lower than a communication capability of the second type of terminal, and the first RSRP threshold value is lower than the second RSRP threshold value.

In an embodiment, the RSRP threshold value includes a third RSRP threshold value.

In an embodiment, performing the random access of the two-step RACH procedure based on the RSRP measurement value of the terminal and the RSRP threshold value includes: performing the random access of the two-step RACH procedure in response to the type of the terminal being the first type and the RSRP measurement value of the terminal is greater than or equal to a third RSRP measurement value.

In an embodiment, performing the random access of the two-step RACH procedure based on the RSRP measurement value of the terminal and the RSRP threshold value includes: performing the random access of the two-step RACH procedure in response to the type of the terminal being the second type and a sum of the RSRP measurement value of the terminal and an RSRP offset value being greater than or equal to a third RSRP measurement value.

In an embodiment, the RSRP offset value is determined based on a predefined rule or a communication protocol.

According to a second aspect of embodiments of the present invention, there is provided a random access method, applied to a network device, including: determining at least one RSRP threshold value, the RSRP threshold value being configured for a terminal to determine to perform random access of a two-step RACH procedure, where a type of the terminal includes a first type and a second type.

In an embodiment, the RSRP threshold value includes a first RSRP threshold value and a second RSRP threshold value; and the first RSRP threshold value corresponds to the first type of the terminal and the second RSRP threshold value corresponds to the second type of the terminal.

In an embodiment, a communication capability of the first type of terminal is lower than a communication capability of the second type of terminal, and the first RSRP threshold value is lower than the second RSRP threshold value.

In an embodiment, the RSRP threshold includes a third RSRP threshold value.

According to a third aspect of embodiments of the present invention, there is provided a random access apparatus, applied to a terminal, including: a determining module configured to determine a type of the terminal and a RSRP threshold value corresponding to the type of the terminal; and an accessing module configured to perform random access of a two-step RACH procedure based on an RSRP measurement value of the terminal and the RSRP threshold value, where the type of the terminal includes a first type and a second type.

In an embodiment, the RSRP threshold value includes a first RSRP threshold value and a second RSRP threshold value; and the first RSRP threshold value corresponds to the first type of the terminal and the second RSRP threshold value corresponds to the second type of the terminal.

In an embodiment, the accessing module is configured to perform the random access of the two-step RACH procedure in response to the type of the terminal being the first type and the RSRP measurement value of the terminal being greater than or equal to the first RSRP threshold value.

In an embodiment, the accessing module is configured to perform the random access of the two-step RACH procedure in response to the type of the terminal being the second type and the RSRP measurement value of the terminal being greater than or equal to the second RSRP threshold value.

In an embodiment, a communication capability of the first type of terminal is lower than a communication capability of the second type of terminal, and the first RSRP threshold value is lower than the second RSRP threshold value.

In an embodiment, the RSRP threshold value includes a third RSRP threshold value.

In an embodiment, the accessing module is configured to perform the random access of the two-step RACH procedure in response to the type of the terminal being the first type and the RSRP measurement value of the terminal being greater than or equal to a third RSRP measurement value.

In an embodiment, the accessing module is configured to perform the random access of the two-step RACH procedure in response to the type of the terminal being the second type and a sum of the RSRP measurement value of the terminal and an RSRP offset value being greater than or equal to a third RSRP measurement value.

In an embodiment, the RSRP offset value is determined based on the predefined rule or the communication protocol.

According to a fourth aspect of embodiments of the present invention, there is provided a random access apparatus, applied to a network device, including: a determining module configured to determine at least one RSRP threshold value, where the RSRP threshold value is configured for a terminal to determine to perform random access of a two-step RACH procedure, where a type of the terminal includes a first type and a second type.

In an embodiment, the RSRP threshold value includes a first RSRP threshold value and a second RSRP threshold value, and the first RSRP threshold value corresponds to the first type of the terminal and the second RSRP threshold value corresponds to the second type of the terminal.

In an embodiment, a communication capability of the first type of terminal is lower than a communication capability of the second type of terminal, and the first RSRP threshold value is lower than the second RSRP threshold value.

In an embodiment, the RSRP threshold value includes a third RSRP threshold value.

According to a fifth aspect of embodiments of the present invention, there is provided a random access device, including: a processor; and a memory for storing processor-executable instructions. The processor is configured to perform the random access method according to the first aspect or any one of embodiments of the first aspect, or perform the random access method according to the second aspect or any one of embodiments of the second aspect.

According to a sixth aspect of embodiments of the present invention, there is provided a non-transitory computer readable storage medium having instructions that, when executed by a processor of a mobile terminal, enable the mobile terminal to perform the random access method according to the first aspect or any one of embodiments of the first aspect or perform the random access method according to the second aspect or any one of embodiments of the second aspect.

The technical solutions provided by the embodiments of the present invention may have the following advantages. With the present invention, the terminal may determine the RSRP threshold value corresponding to its own type, and determine whether to adopt the random access of the two-step RACH procedure based on the determined RSRP threshold value. The present invention may allow some terminals to use the random access of the two-step RACH procedure normally, thus reducing the power consumption for these terminals.

It is to be understood that both the foregoing general description and the following detailed description are exemplary and explanatory only, and shall not be construed to limit the present invention.

### BRIEF DESCRIPTION OF THE DRAWINGS

The accompanying drawings, which are incorporated in and constitute a part of this specification, illustrate embodiments in line with the present invention and, together with the description, serve to explain the principle of the present invention.
FIG. 1 is a schematic diagram illustrating a communication system architecture of a network device and a terminal according to an embodiment.
FIG. 2 is a flow chart of a random access method according to an embodiment.
FIG. 3 is a flow chart of a random access method according to another embodiment.
FIG. 4 is a flow chart of a random access method according to a further embodiment.
FIG. 5 is a flow chart of a random access method according to a further embodiment.
FIG. 6 is a flow chart of a random access method according to a further embodiment.
FIG. 7 is a flow chart of a random access method according to a further embodiment.
FIG. 8 is a block diagram illustrating a random access apparatus according to an embodiment.
FIG. 9 is a block diagram illustrating a random access apparatus according to another embodiment.
FIG. 10 is a block diagram illustrating a random access device according to a further embodiment.
FIG. 11 is a block diagram illustrating a random access device according to a further embodiment.

### DETAILED DESCRIPTION

Embodiments will be described in detail herein, examples of which are illustrated in the accompanying drawings. The following description refers to the accompanying drawings in which the same reference numerals in different drawings represent the same or similar elements unless otherwise represented. The implementations set forth in the following description of the embodiments do not represent all implementations in line with the present invention. Instead, they are merely examples of devices and methods in line with aspects related to the present invention as recited in the appended claims.

Terms used in embodiments of the present invention are only for the purpose of describing specific embodiments, and should not be construed to limit the present invention. As used in the embodiments of the present invention and the appended claims, "a/an", "said" and "the" in a singular form are intended to include plural forms, unless clearly indicated in the context otherwise. It should also be understood that, the term "and/or" used herein represents and contains any one of associated listed items or all possible combinations of more than one associated listed items.

It should be understood that terms such as "first," "second" and "third" may be used in the embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if' may be construed to mean "when" or "upon" or "in response to determining" depending on the context.

Embodiments of the present invention will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present invention, and are not construed to limit the embodiments of the present invention.

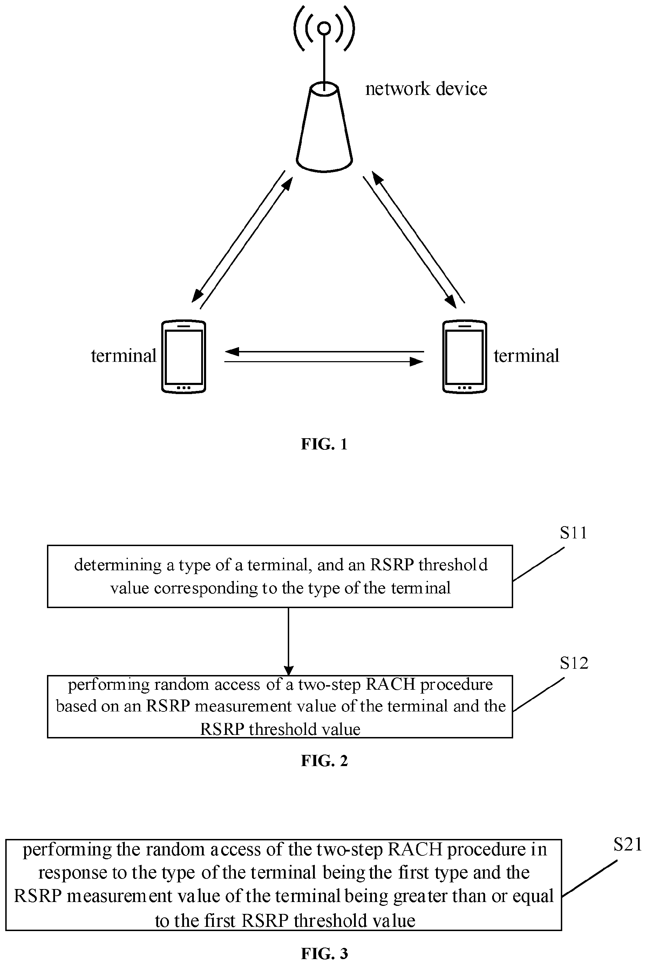

FIG. 1 is a schematic diagram showing a communication system architecture of a network device and a terminal according to an embodiment. A communication method provided by the present invention may be applied to the communication system shown in FIG. 1. As shown in FIG. 1, a network device may send signaling based on the architecture as shown in FIG. 1.

It may be understood that the communication system between the network device and the terminal shown in FIG. 1 is only for schematic illustration. The wireless communication system may also include other network devices, such as core network devices, wireless relay devices, and wireless backhaul devices, which are not shown in FIG 1. The number of network devices and the number of terminals included in the wireless communication system are not limited in embodiments of the present invention.

It may be further understood that the wireless communication system in the embodiments of the present invention is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The networks may be classified, according to capacity, rate, delay and other factors of different networks, into a 2nd generation (2G) network, a 3G network, a 4G network, or a future evolution network, such as a 5G network, which may also be referred to as a new radio (NR) network. For ease of description, a wireless communication network will be sometimes abbreviated as a network in the present invention.

Further, the network device involved in the present invention may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP), or the like, or may also be a gNB in a NR system, or may also be a component or a part of a device that constitutes a base station, etc. The network device may also be a vehicle-mounted device when it is used in a vehicle to everything (V2X) communication system. It is to be understood that the specific technology and specific device form adopted by the network device are not limited in the embodiments of the present invention.

Further, the terminal involved in the present invention, which may also be referred to as a terminal device, a user equipment (UE), a mobile station (MS), a mobile terminal (MT), etc., is a device that provides voice and/or data connectivity to a user. For example, the terminal may be a handheld device with a wireless connection function, a vehicle-mounted device, or the like. At present, for example, the terminal may be a mobile phone, a pocket personal computer (PPC), a palmtop computer, a personal digital assistant (PDA), a notebook computer, a tablet computer, a wearable device, a vehicle-mounted device, or the like. In addition, the terminal device may also be vehicle-mounted device when it is used in a vehicle to everything (V2X) communication system. It is to be understood that the specific technology and specific device form adopted by the terminal are not limited in the embodiments of the present invention.

In the next generation communication technology, the terminal may support random access of a four-step RACH procedure as well as random access of a two-step RACH procedure. Whether the terminal adopts four-step random access or two-step random access is determined based on an RSRP measurement value of the terminal. The terminal receives a RSRP threshold value broadcast by the network device, and it is determined to adopt the two-step random access in a case that the RSRP measurement value of the terminal is higher than or equal to the RSRP threshold value.

In the related art, a value of the RSRP may reflect a distance between the terminal and the network device such as a base station. In a case that the distance between the terminal and the base station is within a coverage distance of one base station, that is, the terminal is located within a coverage area of one base station. In other words, data may be transmitted even if the terminal does not know which cell it is located in. In this case, the random access of the two-step RACH procedure may be adopted. However, a Redcap terminal is small in size and exhibits an antenna efficiency loss. Even when a distance between the Redcap terminal and the base station is within a coverage area of the base station, an RSRP measurement value of the Redcap terminal is still lower than the RSRP threshold value. As a result, some Redcap terminals could not adopt the two-step RACH procedure and enjoy a benefit of power saving.

On this basis, the present invention provides a random access method to redetermine the RSRP threshold value of the terminal, i.e., to determine a corresponding RSRP threshold value for each of different types of terminals, thus solving the problem that some terminals could not normally adopt the two-step RACH procedure to reduce power consumption for the terminals.

FIG. 2 is a flow chart of a random access method according to an embodiment. As shown in FIG. 2, the random access method is applied to the terminal, including the following steps.

In S 11, a type of the terminal and an RSRP threshold value corresponding to the type of the terminal are determined.

In S12, random access of a two-step RACH procedure is performed based on an RSRP measurement value of the terminal and the RSRP threshold value.

In embodiments of the present invention, the type of the terminal includes a first type and a second type, and may further include other types.

In some embodiments of the present invention, the terminal determines its own type, and the RSRP threshold value is determined corresponding to the terminal's own type. The terminal determines the current RSRP measurement value, and determines to perform the random access of the two-step RACH procedure according to a size relationship between the RSRP measurement value and the RSRP threshold value.

With the random access method provided in the present invention, the terminal may determine a corresponding RSRP threshold value based on its type. The RSRP threshold value is used for the terminal to determine whether to perform the random access of the two-step RACH procedure. The problem that some terminals could not normally adopt the random access of the two-step RACH procedure is solved, and the power can be saved for these terminals.

In some embodiments of the present invention, the network may configure multiple RSRP threshold values for terminals, and each RSRP threshold value corresponds to a different terminal type.

In an embodiment of the present invention, the RSRP threshold value includes a first RSRP threshold value and a second RSRP threshold value. The first RSRP threshold value corresponds to the first type of the terminal, and the second RSRP threshold value corresponds to the second type of the terminal.

FIG. 3 is a flow chart of a random access method according to an embodiment. As shown in FIG. 3, the random access method is applied to the terminal, including the following step.

In S21, the random access of the two-step RACH procedure is performed in response to the type of the terminal being the first type and the RSRP measurement value of the terminal being greater than or equal to the first RSRP threshold value.

In the embodiments of the present invention, the terminal determines that its own type is the first type, determines the random access of the two-step RACH procedure according to the first RSRP threshold value, and determines the current RSRP measurement value. The random access of the two-step RACH procedure is performed in response to the RSRP measurement value of the terminal being greater than or equal to the first RSRP threshold value.

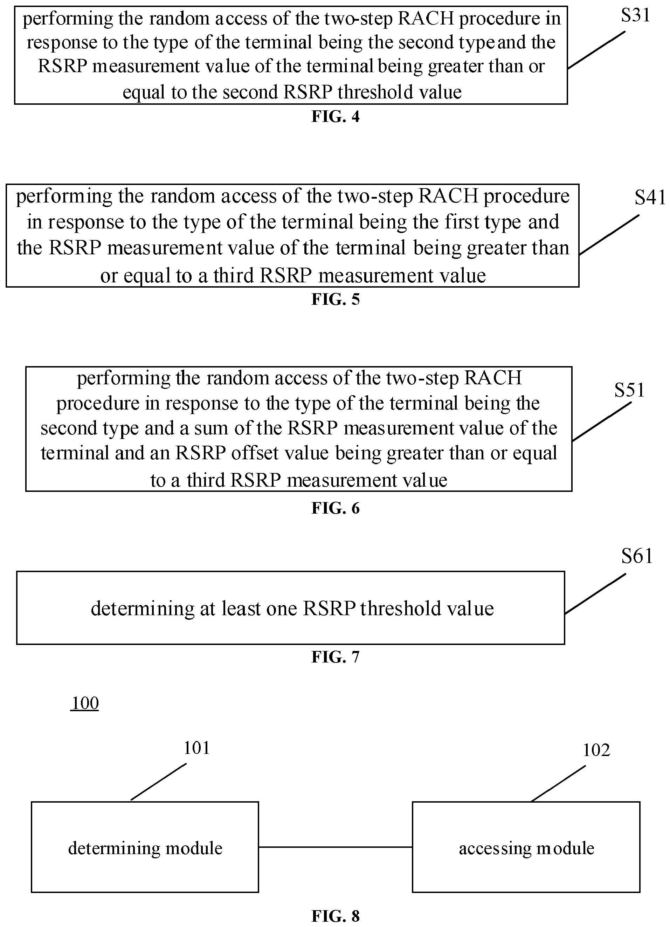

FIG. 4 is a flow chart of a random access method according to an embodiment. As shown in FIG. 4, the random access method is applied to the terminal, including the following step.

In S31, the random access of the two-step RACH procedure is performed in response to the type of the terminal being the second type and the RSRP measurement value of the terminal being greater than or equal to the second RSRP threshold value.

In the embodiments of the present invention, the terminal determines that its own type is the second type, determines the random access of the two-step RACH procedure by using the second RSRP threshold value, and determines the current RSRP measurement value. The random access of the two-step RACH procedure is performed in response to the RSRP measurement value of the terminal being greater than or equal to the second RSRP threshold value.

In embodiments of the present invention, a communication capability of the first type of terminal is lower than a communication capability of the second type of terminal. For example, the first type of terminals may be terminals with a normal communication capability. The second type of terminals may be all Redcap terminals with a relatively low capability. Alternatively, the second type of terminals may be some Redcap terminals (e.g. wearable terminals or industrial sensor terminals), and the first type of terminals may be all the other terminals except for the second type of the terminals. The first RSRP threshold value is lower than the second RSRP threshold value.

In some embodiments of the present invention, the network may configure a common RSRP threshold value for the terminal(s), that is, the common RSRP threshold is applicable to all terminals. The network may broadcast the common RSRP threshold value. In the present invention, this RSRP threshold value is referred to as a third RSRP threshold value for distinguishing from others.

In an embodiment of the present invention, the RSRP threshold value includes the third RSRP threshold value. As mentioned above, the first type of terminals may be terminals with the normal communication capability. The second type of terminals may be all Redcap terminals with the relatively low capability. Alternatively, the second type of terminals may be some Redcap terminals (e.g. wearable terminals or industrial sensor terminals), and the first type of terminals may be all the other terminals except for the second type of the terminals. The third RSRP threshold value is for all terminal types.

FIG. 5 is a flow chart of a random access method according to an embodiment. As shown in FIG. 5, the random access method is applied to the terminal, including the following step.

In S41, the random access of the two-step RACH procedure is performed in response to the type of the terminal being the first type and the RSRP measurement value of the terminal being greater than or equal to a third RSRP measurement value.

In the embodiments of the present invention, the RSRP measurement value of the terminal is determined, and it is determined to perform the random access of the two-step RACH procedure based on the size relationship between the determined RSRP measurement value and the third RSRP threshold value broadcast by the network device in response to the type of the terminal being the first type. The random access of the two-step RACH procedure is performed in a case that the RSRP measurement value of the terminal is greater than or equal to the third RSRP measurement value.

FIG. 6 is a flow chart of a random access method according to an embodiment. As shown in FIG. 6, the random access method is applied to the terminal, including the following step.

In S51, the random access of the two-step RACH procedure is performed in response to the type of the terminal being the second type and a sum of the RSRP measurement value of the terminal and an RSRP offset value being greater than or equal to a third RSRP measurement value.

In the embodiments of the present invention, in response to the type of the terminal being the second type, the RSRP measurement value of the terminal is determined, and the RSRP offset value is further determined. The RSRP measurement value is calibrated according to the RSRP offset value, and the calibrated RSRP measurement value is determined, that is, the sum of the RSRP measurement value of the second type terminal and the RSRP offset value. The random access of the two-step RACH procedure is performed in a case that the sum of the RSRP measurement value of the terminal and the RSRP offset value is greater than or equal to the third RSRP measurement value.

In embodiments of the present invention, the RSRP offset value used by the second type of the terminal may be determined based on a predefined rule, or the RSRP offset value may be determined based on a communication protocol.

Based on the same/similar conception, embodiments of the present invention further provides a random access method.

FIG. 7 is a flow chart of a random access method according to an embodiment. As shown in FIG. 7, the random access method is applied to a network device, including the following step.

In S61, at least one RSRP threshold value is determined.

In the embodiments of the present invention, the RSRP threshold value is configured for the terminal to determine to perform the random access of the two-step RACH procedure. The type of the terminal may include the first type and the second type, and may further include other types.

In some embodiments of the present invention, the terminal determines its own type, and the RSRP threshold value is determined corresponding to the terminal's own type. The terminal determines the current RSRP measurement value, and determines to perform the random access of the two-step RACH procedure based on a size relationship between the RSRP measurement value and the RSRP threshold value.

With the random access method provided in the present invention, the terminal may determine the corresponding RSRP threshold value based on its type. The RSRP threshold value is used for the terminal to determine whether to perform the random access of the two-step RACH procedure. The problem that some terminals could not normally use the random access of the two-step RACH procedure is solved, and the power can be saved for these terminals.

In some embodiments of the present invention, the network may configure multiple RSRP threshold values for terminals, and each RSRP threshold value corresponds to a different terminal type.

In an embodiment of the present invention, the RSRP threshold value includes the first RSRP threshold value and the second RSRP threshold value. The first RSRP threshold value corresponds to the first type of the terminal, and the second RSRP threshold value corresponds to the second type of the terminal.

In embodiments of the present invention, the terminal determines that its own type is the first type, determines the random access of the two-step RACH procedure by using the first RSRP threshold value, and determines the current RSRP measurement value. The random access of the two-step RACH procedure is performed in response to the RSRP measurement value of the terminal being greater than or equal to the first RSRP threshold value.

In embodiments of the present invention, the terminal determines that its own type is the second type, determines the random access of the two-step RACH procedure by using the second RSRP threshold value, and determines the current RSRP measurement value. The random access of the two-step RACH procedure is performed in response to the RSRP measurement value of the terminal being greater than or equal to the second RSRP threshold value.

In embodiments of the present invention, the communication capability of the first type of terminal is lower than the communication capability of the second type of terminal. For example, the first type of terminals may be terminals with the normal communication capability. The second type of terminals may be all Redcap terminals with the relatively low capability. Alternatively, the second type of terminals may be some Redcap terminals (e.g. wearable terminals or industrial sensor terminals), and the first type of terminals may be all the other terminals except for the second type of the terminals. The first RSRP threshold value is lower than the second RSRP threshold value.

In some embodiments of the present invention, the network may configure a common RSRP threshold value for the terminal(s), that is, the common RSRP threshold is applicable to all terminals. The network may broadcast the common RSRP threshold value. In the present invention, this RSRP threshold value is referred to as a third RSRP threshold value for distinguishing from others.

In an embodiment of the present invention, the RSRP threshold value includes the third RSRP threshold value. As mentioned above, the first type of the terminals may be terminals with the normal communication capability. The second type of the terminals may be all Redcap terminals with the relatively low capability. Alternatively, the second type of terminals may be some Redcap terminals (e.g. wearable terminals or industrial sensor terminals), and the first type of terminals may be all the other terminals except for the second type of the terminals. The third RSRP threshold value is for all terminal types.

In embodiments of the present invention, in response to the type of the terminal being the first type, the RSRP measurement value of the terminal is determined, and it is determined to perform the random access of the two-step RACH procedure based on the size relationship between the determined RSRP measurement value and the third RSRP threshold value broadcast by the network device. The random access of the two-step RACH procedure is performed in a case that the RSRP measurement value of the terminal is greater than or equal to the third RSRP measurement value.

The random access of the two-step RACH procedure is performed in response to the type of the terminal being the second type and the sum of the RSRP measurement value of the terminal and the RSRP offset value being greater than or equal to the third RSRP measurement value.

In embodiments of the present invention, in response to the type of the terminal being the second type, the RSRP measurement value of the terminal is determined, and the RSRP offset value is further determined. The RSRP measurement value is calibrated according to the RSRP offset value, that is, the calibrated RSRP measurement value is determined, and the sum of the RSRP measurement value of the terminal of the second type and the RSRP offset value is determined. The random access of the two-step RACH procedure is performed in a case that the sum of the RSRP measurement value of the terminal and the RSRP offset value is greater than or equal to the third RSRP measurement value.

In embodiments of the present invention, the RSRP offset value used by the second type of the terminal may be determined based on the predefined rule, or the RSRP offset value may be determined based on the communication protocol.

Based on the same conception, embodiments of the present invention further provides a random access apparatus.

It may be understood that, in order to implement the above-mentioned functions, the random access apparatus provided by the embodiments of the present invention includes hardware structures and/or software modules for performing various functions correspondingly. The embodiments of the present invention may be implemented in a form of hardware or a combination of hardware and computer software, in combination with units and algorithm steps of each example disclosed in the embodiments of the present invention. Whether a function is performed by the hardware or by the computer software to drive the hardware depends on a specific application and design constraints of the technical solution. For specific applications, those skilled in the art may use different methods to implement the described function, but such an implementation should not be regarded as extending beyond the scope of the technical solutions of the embodiments of the present invention.

FIG. 8 is a block diagram illustrating a random access apparatus according to an embodiment. Referring to FIG. 8, the random access apparatus 100 is applied to a terminal, and includes a determining module 101 and an accessing module 102.

The determining module 101 is configured to determine a type of the terminal and an RSRP threshold value corresponding to the type of the terminal; and the accessing module is configured to perform random access of the two-step RACH procedure based on the RSRP measurement value of the terminal and the RSRP threshold value. The type of the terminal includes the first type and the second type.

In embodiments of the present invention, the RSRP threshold value includes a first RSRP threshold value and a second RSRP threshold value. The first RSRP threshold value corresponds to the first type of the terminal and the second RSRP threshold value corresponds to the second type of the terminal.

In embodiments of the present invention, the accessing module 102 is configured to perform the random access of the two-step RACH procedure in response to the type of the terminal being the first type and the RSRP measurement value of the terminal being greater than or equal to the first RSRP threshold value.

In embodiments of the present invention, the accessing module 102 is configured to perform the random access of the two-step RACH procedure in response to the type of the terminal being the second type and the RSRP measurement value of the terminal being greater than or equal to the second RSRP threshold value.

In embodiments of the present invention, a communication capability of the first type of the terminal is lower than a communication capability of the second type of the terminal, and the first RSRP threshold value is lower than the second RSRP threshold value.

In embodiments of the present invention, the RSRP threshold value includes a third RSRP threshold value.

In embodiments of the present invention, the accessing module 102 is configured to perform the random access of the two-step RACH procedure in response to the type of the terminal being the first type and the RSRP measurement value of the terminal being greater than or equal to a third RSRP measurement value.

In embodiments of the present invention, the accessing module 102 is configured to perform the random access of the two-step RACH procedure in response to the type of the terminal being the second type and a sum of the RSRP measurement value of the terminal and an RSRP offset value being greater than or equal to a third RSRP measurement value.

In embodiments of the present invention, the RSRP offset value is determined based on the predefined rule or the communication protocol.

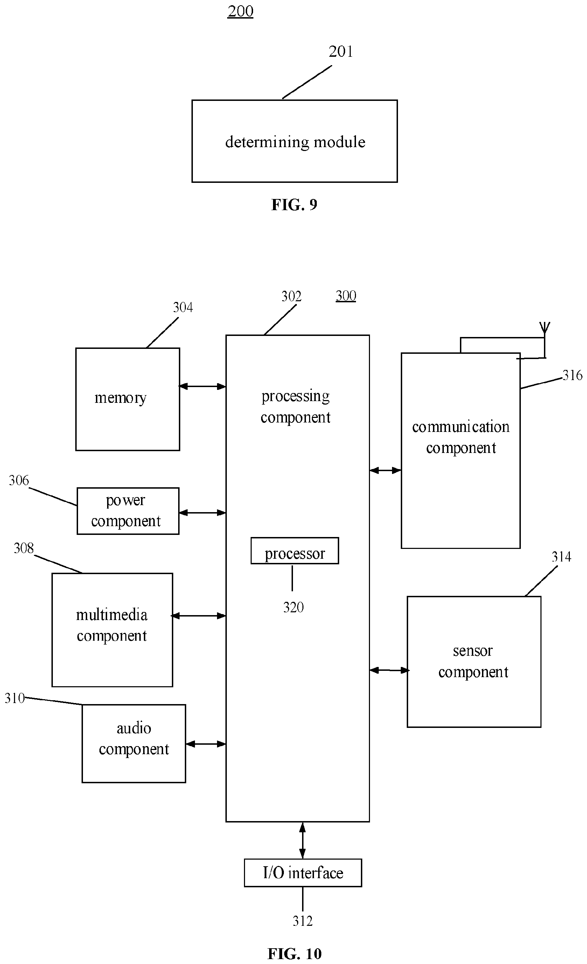

FIG. 9 is a block diagram illustrating a random access apparatus according to an embodiment. Referring to FIG. 9, the random access apparatus 200 is applied to the terminal, and includes a determining module 201.

The determining module 201 is configured to determine at least one RSRP threshold value. The RSRP threshold value is configured for the terminal to determine to perform the random access of the two-step RACH procedure. The type of the terminal includes a first type and a second type.

In embodiments of the present invention, the RSRP threshold value includes a first RSRP threshold value and a second RSRP threshold value.

The first RSRP threshold value corresponds to the first type of the terminal and the second RSRP threshold value corresponds to the second type of the terminal.

In embodiments of the present invention, a communication capability of the first type of the terminal is lower than a communication capability of the second type of the terminal, and the first RSRP threshold value is lower than the second RSRP threshold value.

In embodiments of the present invention, the RSRP threshold value includes a third RSRP threshold value.

With respect to the apparatuses in the above embodiments, the specific manners for performing operations for individual modules therein have been described in detail in the embodiments regarding the random access method, which will not be elaborated herein.

FIG. 10 is a block diagram illustrating a random access device according to an embodiment. For example, the device 300 can be a mobile phone, a computer, a digital broadcast terminal, a messaging device, a game console, a tablet device, a medical device, a fitness device, a personal digital assistant, or the like.

Referring to FIG. 10, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone ("MIC") configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, a button and the like. The button may include, but not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as WiFi, 2G, or 3G, or a combination thereof. In one embodiment, the communication component 316 receives a broadcast signal or broadcast associated information from an external broadcast management system via a broadcast channel. In one embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In embodiments, there is further provided a non-transitory computer-readable storage medium (such as the memory 304) including instructions that, when executed by the processor 320 of the device 300, to perform any of the above-described methods. For example, the non-transitory computer-readable storage medium may be a ROM, a RAM, a CD-ROM, a magnetic tape, a floppy disc, an optical data storage device, and the like.

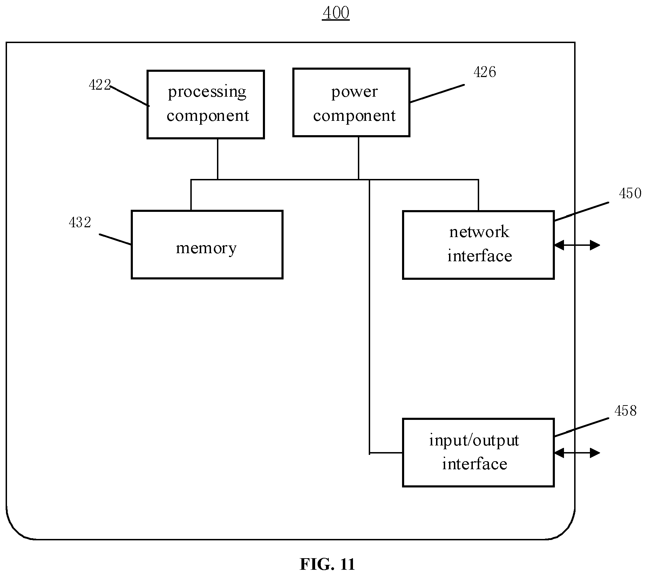

FIG. 11 is a block diagram illustrating a random access device according to an embodiment. For example, the device 400 may be a server. Referring to FIG. 11, the device 400 includes a processing component 422 and a memory resource represented by a memory 432. The processing component 422 may further include one or more processors. The memory resource is configured to store instructions executable by the processing component 422, such as an application program. The application program stored in the memory 432 may include one or more modules corresponding to a set of instructions. In addition, the processing component 422 is configured to execute the instructions to perform the above method.

The device 400 further includes a power component 426 configured to operate a power management of the device 400, a wired or wireless network interface 450 configured to connect the device 400 to the network, and an input/output (I/O) interface 458. The device 400 may operate an operating system stored in the memory 432, such as Windows Server TM, Mac OS XTM, Unix TM, Linux TM, Free BSDTM, or the like.

It is further understood that "a plurality" in this disclosure refers to two or more, and other quantifiers are similar thereto. Term "and/or", which describes an associated relationship of associated objects, refers to three relationships. For example, A and/or B means that A exists alone, A and B exist at the same time, and B exists alone. A character "/" generally indicates that contextual objects are in an "or" relationship. Terms "a/an" and "the" in the singular form are intended to include plural forms, unless clearly indicated in the context otherwise.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, without departing from the scope of embodiments of the present invention, first information may also be referred to as second information, and similarly, the second information may also be referred to as the first information.

It is further understood that although operations are described in a specific order in the accompanying drawings in the embodiments of the present invention, it should not be understood that these operations are required to be performed in the specific order shown or in a serial order, or that all of the operations shown are required to be performed to obtain desired results. In some circumstances, multitasking and parallel processing may be advantageous.

Other embodiments of the present invention will be apparent to those skilled in the art from consideration of the specification and practice of the present invention disclosed here. The present invention is intended to cover any variations, uses, or adaptations of the present invention following the general principles thereof and including common knowledge or conventional technical means known in the art but not disclosed in the present invention. The specification and examples should be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. The scope of the present invention is only limited by the appended claims.

## Claims

1. A random access method, applied to a terminal, comprising:
determining a type of the terminal, and a reference signal receiving power, RSRP, threshold value corresponding to the type of the terminal; and
performing random access of a two-step random access channel, RACH, procedure based on an RSRP measurement value of the terminal and the RSRP threshold value,
wherein the type of the terminal comprises a first type and a second type.

2. The random access method of claim 1, wherein the RSRP threshold value comprises a first RSRP threshold value and a second RSRP threshold value; and
wherein the first RSRP threshold value corresponds to the first type of the terminal and the second RSRP threshold value corresponds to the second type of the terminal.

3. The random access method of claim 2, wherein performing the random access of the two-step RACH procedure based on the RSRP measurement value of the terminal and the RSRP threshold value comprises:
performing the random access of the two-step RACH procedure in response to the type of the terminal being the first type and the RSRP measurement value of the terminal being greater than or equal to the first RSRP threshold value.

4. The random access method of claim 2, wherein performing the random access of the two-step RACH procedure based on the RSRP measurement value of the terminal and the RSRP threshold value comprises:
performing the random access of the two-step RACH procedure in response to the type of the terminal being the second type and the RSRP measurement value of the terminal being greater than or equal to the second RSRP threshold value.

5. The random access method of any one of claims 2 to 4, wherein a communication capability of the first type of terminal is lower than a communication capability of the second type of terminal, and the first RSRP threshold value is lower than the second RSRP threshold value.

6. The random access method of claim 1, wherein the RSRP threshold value comprises a third RSRP threshold value.

7. The random access method of claim 6, wherein performing the random access of the two-step RACH procedure based on the RSRP measurement value of the terminal and the RSRP threshold value comprises:
performing the random access of the two-step RACH procedure in response to the type of the terminal being the first type and the RSRP measurement value of the terminal being greater than or equal to a third RSRP measurement value.

8. The random access method of claim 6 or 7, wherein performing the random access of the two-step RACH procedure based on the RSRP measurement value of the terminal and the RSRP threshold value comprises:
performing the random access of the two-step RACH procedure in response to the type of the terminal being the second type and a sum of the RSRP measurement value of the terminal and an RSRP offset value being greater than or equal to a third RSRP measurement value.

9. The random access method of claim 8, wherein the RSRP offset value is determined based on a predefined rule or a communication protocol.

10. A random access method, applied to a network device, comprising:
determining at least one RSRP threshold value, wherein the RSRP threshold value is configured for a terminal to determine to perform random access of a two-step RACH procedure,
wherein a type of the terminal comprises a first type and a second type.

11. The random access method of claim 10, wherein the RSRP threshold value comprises a first RSRP threshold value and a second RSRP threshold value; and
wherein the first RSRP threshold value corresponds to the first type of the terminal and the second RSRP threshold value corresponds to the second type of the terminal.

12. The random access method of claim 11, wherein a communication capability of the first type of terminal is lower than a communication capability of the second type of terminal, and wherein the first RSRP threshold value is lower than the second RSRP threshold value.

13. The random access method of claim 10, wherein the RSRP threshold comprises a third RSRP threshold value.

14. A random access apparatus, applied to a terminal, comprising:
a determining module configured to determine a type of the terminal and a RSRP threshold value corresponding to the type of the terminal; and
an accessing module configured to perform random access of a two-step RACH procedure based on an RSRP measurement value of the terminal and the RSRP threshold value,
wherein the type of the terminal comprises a first type and a second type.

15. A random access apparatus, applied to a network device, comprising:
a determining module configured to determine at least one RSRP threshold value, wherein the RSRP threshold value is configured for a terminal to determine to perform random access of a two-step RACH procedure,
wherein a type of the terminal comprises a first type and a second type.

16. A random access device, comprising:
a processor; and
a memory for storing processor-executable instructions;
wherein the processor is configured to perform the random access method according to any one of claims 1 to 9, or perform the random access method according to any one of claims 10 to 13.

17. A non-transitory computer readable storage medium having instructions that, when executed by a processor of a mobile terminal, enable the mobile terminal to perform the random access method according to any one of claims 1 to 9 or perform the random access method according to any one of claims 10 to 13.
